# EUROPEAN PATENT SPECIFICATION

(11) **EP 0 490 596 B1**
(45) Date of publication and mention of the grant of the patent: **07.02.1996**
(21) Application number: 91311394.0
(22) Date of filing: 06.12.1991
(51) Int. Cl.: B60C 3/04, B60C 11/00

(54) **Radial tyre**
Radialreifen
Bandage pneumatique radial

(30) Priority: 10.12.1990 JP 410002/90; 10.12.1990 JP 410003/90; 28.12.1990 JP 415640/90
(43) Date of publication of application: 17.06.1992
(73) Proprietor: SUMITOMO RUBBER INDUSTRIES LIMITED, Chuo-ku Kobe-shi Hyogo 651 (JP)
(72) Inventor: Saito, Kenji, W-6000 Frankfurt am Main 90 (DE); Kajikawa, Akira, Higashinada-ku, Kobe-shi, Hyogo-ken (JP); Nakatani, Akihiro, Kakogawa-shi, Hyogo-ken (JP); Yamihira, Atsushi, Nishinomiya-shi, Hyogo-ken (JP); Noma, Hiroyuki, Kita-ku, Kobe-shi, Hyogo-ken (JP); Kazuhiko, Kawamura, Akashi-shi, Hyogo-ken (JP)
(74) Representative: Stewart, Charles Geoffrey

(56) References cited:
- EP-A- 0 237 462
- EP-A- 0 323 519
- FR-A- 2 647 716
- GB-A- 2 037 677
- GB-A- 2 132 574
- PATENT ABSTRACTS OF JAPAN vol. 8, no. 5 (M-267)(1442) 11 January 1984 & JP-A-58 170 602 (THE YOKOHAMA GOMU K.K.) 7 October 1983

## Description

The present invention relates to a pneumatic radial ply tyre in which uneven wear at the tread shoulders is effectively reduced. It may be applied to passenger car tyres, light truck tyres, heavy truck/bus tyres and the like.

In belted radial ply tyres, especially those having a stiff belt, e.g. a steel belt, the ground pressure distribution is liable to become uneven, and uneven wear is liable to be caused between the tread crown and tread shoulders. In general, the amount of wear in the tread shoulders is larger than that of the tread crown.

Such uneven wear between the tread crown and tread shoulders is considered to be caused by the curved tread profile. That is, the tread has a difference in diameter between the tread crown and tread shoulders, and this causes a slip against the ground so that the tread shoulders are worn earlier than the crown.

In order to reduce such uneven wear it has been proposed to increase the radius of curvature of the tread profile, to increase the size of the tread blocks in the tread shoulders to increase the rigidity thereof, and to increase the rigidity of the belt particularly in the tread shoulder regions. However, such proposals have not solved the problem satisfactorily.

Further, an excessive increase in the shoulder block rigidity or the belt rigidity is liable to cause other problems such as increased tyre noise and deteriorated ride comfort.

It is therefore the object of the present invention to provide a radial ply tyre, in which, by improving the ground pressure distribution, the tread shoulders are effectively prevented from uneven wear.

According to the present invention as disclosed in claim 1, a radial ply tyre comprises a bead core disposed in each bead portion, a radial or semi-radial carcass extending between the bead portions and turned up around the bead cores, and a belt comprising at least two cross plies disposed radially outside the carcass and inside the tread, the belt having edge portions curved towards the sidewalls characterised in that when in a state that the tyre is mounted on its regular rim and inflated to its regular inner pressure but having no applied tyre load, the effective belt width BW (mm) of the effective belt part BE of the belt, the belt edge camber height CH (mm) of the belt, and the tyre section width TW (mm) are such that$\text{2.50(BW/TW)-1.25 < CH < 13.3(BW/TW)-4.65}$ The regular rim is the rim officially approved for the tyre by, for example JATMA (Japan), TRA (USA), ETRTO (Europe) or the like.

The regular inner pressure is the maximum air pressure for the tyre officially specified in the Air pressure/Max. loads Table by the above-mentioned association.

The tyre section width TW is the maximum cross sectional width of the tyre measured excluding decorative patterns and letters, if any.

The effective belt part BE is the part of a belt where at least two belt plies are overlapped with each other so that the cord directions thereof cross, that is, the cords in the ply cross the cords in the other ply.

The effective belt width BW is the maximum width of the effective belt part BE measured between the axially outermost edges (A) thereof. Thus when the belt is composed of two crossed plies, the effective belt width BW is the width of the narrower ply and when the belt is composed of three or more plies, the effective belt width BW is the width of the second widest belt ply.

The belt edge camber height CH is the radial distance between two points A and B on the thickness centre line L of the two belt plies which define the above-mentioned effective belt part BE, more particularly the centre line drawn between the cords in the radially outer belt ply and the cords of the radially inner belt ply.

The point A is located at the above-mentioned outermost edge A of the effective belt part BE.

The point B is located axially inwards of the point A by an axial distance of 0.2 times the effective belt width BW. In other words, the point B is at an axial distance of 0.3 times BW from the tyre equator.

Hereinafter, the 0.2BW width part and the in-between part are respectively referred as the "lateral part OP" and the "central part IP" of the belt, and the thickness centre line L is defined as the "belt profile".

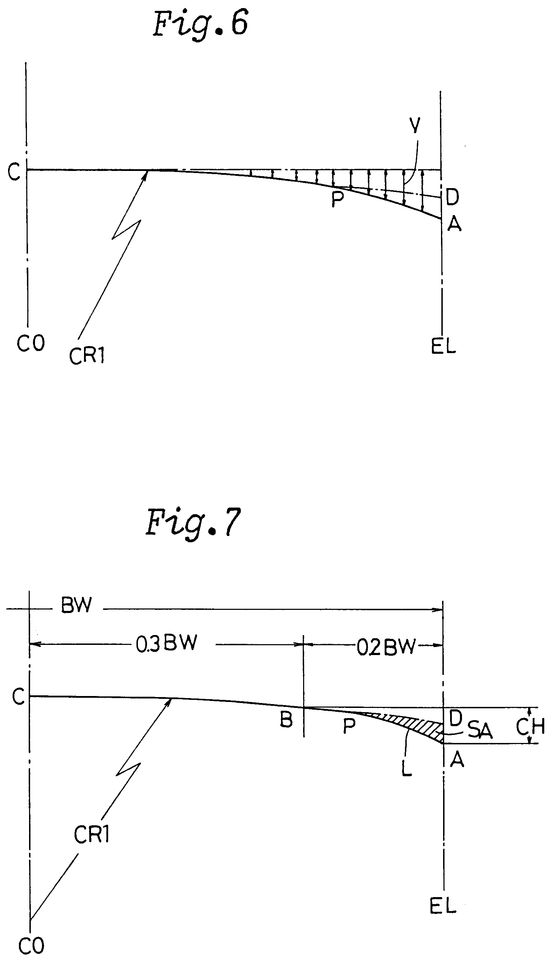

The belt edge camber area SA is, as shown in Fig.7, the area surrounded by three lines, line A-B, line A-D and line B-D.

Based on the central part IP being formed by a single radius of curvature and the lateral parts OP are cambered towards the tyre sidewall portions, the line B-D is an extension of the line B-C, that is, a part of the single radius arc C-B-D.

The line A-D is a straight line drawn radially outwardly from the point A parallel to the tyre equator CO.

The line A-B is the above-mentioned lateral part OP of the thickness centre line L.

Incidentally, the above-mentioned sizes and profiles can be measured with a CT scanner which allows measurement without tyre cutting.

The effectiveness was established by various tests conducted by the inventors.

First, the amount of uneven wear in the tread shoulder has a correlation with the radius of curvature of the belt profile in the tread shoulder, and further it closely relates to the effective belt part BE of the belt.

Secondly, the lateral part OP of the belt affects uneven wear, and the curvature of the lateral part OP or the belt edge camber height CH is closely related to the amount of uneven wear.

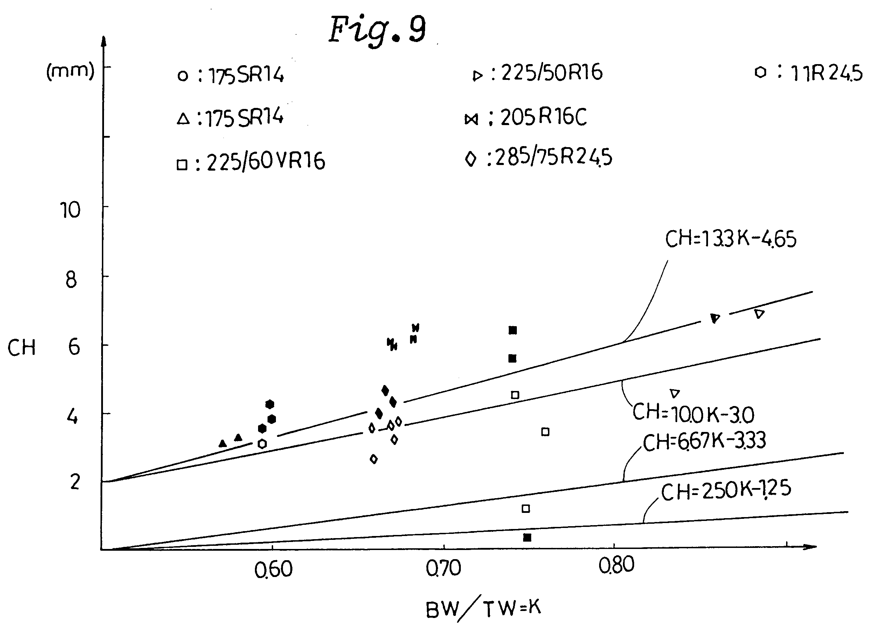

Thirdly, when the above-mentioned belt edge camber height CH (mm) satisfies the following equation 2, uneven wear is prevented.$\text{CH < 13.3(BW/TW)-4.65}$ where
BW = the effective belt width in mm
TW = the tyre section width in mm
The tests shown in Fig.9 show this. In the tests changing the tyre size, aspect ratio and the number of belt plies, the values of the belt edge camber height CH and the quotient BW/TW can be seen to be changed.

In Fig.9 the shape of the plotting mark indicates the size of the tyre, and if the mark is printed solid black, it means that uneven wear occurred.

As apparent from Fig.9, the condition by which uneven wear is prevented is as defined by the inventors in the above-mentioned equation 2 by the relation between the quotient BW/TW and the belt edge camber height CH, regardless of the tyre size, aspect ratio and belt ply number.

By setting the belt edge camber height CH to be not more than the value of 13.3(BW/TW)-4.65, the belt easily becomes flat when in the ground contacting patch as shown by a chain line BL in Fig.8 (broken line: nondeforned belt profile L), and further the difference in the amount of radial deformation of the belt between the tread crown and tread shoulders is decreased.

As a result, the ground pressure distribution is made uniform, and slip between the tread shoulders and the ground is reduced, and thereby the above-mentioned uneven wear is prevented.

More preferably, the belt edge camber height CH is set so that$\text{CH < 10.0(BW/TW)-3.0}$ The inventors also realised that if the belt edge camber height CH is excessively small, the ground pressure at the tread shoulders increases, and the wear of the tread shoulders especially during cornering increases.

Accordingly, the lower limit of the invention was given to the belt edge camber height CH as$\text{CH > 2.50(BW/TW)-1.25}$ More preferably however,$\text{CH > 6.67(BW/TW)-3.33}$ In relation to the equation 2, if the effective belt width BW is substantially the same as the width of the ground contacting area, the quotient BW/TW has a tendency to increase as the tyre aspect ratio decreases. Accordingly, in a low aspect ratio tyre, the effective belt width BW becomes relatively large, therefore, a relatively large value is used for the belt edge camber height CH.

Preferably, the radial tyre is further provided with a belt profile such that an arc passing three points B and C on the above-mentioned thickness centre line L has its centre on the equatorial plane of the tyre, and the radius CR1 of the arc is more than 1.4 times the tyre section width TW, where the points B are the above-mentioned axially inner points B spaced apart a distance of 0.3BW from the tyre equatorial plane, and the point C is the point of intersection between the equatorial plane and the thickness centre line L.

This controls increase in the ground pressure in the tread crown region, and can thus even out the ground pressure distribution.

However, if the radius CR1 is more than 15 times the tyre section withth TW, the ground pressure is liable to be increased at the tread shoulders by the flattened tread crown region.
By setting the radius CR1 in the range of not more than 15 times, and more preferably not more than 10 times the tyre section width TW, the inventors found such a ground pressure increase can be prevented.

The belt profile or the thickness centre line L comprises the central part IP and the two lateral parts OP as mentioned above.

The central part IP is formed by a single radius of curvature of the above-mentioned radius CR1, and each of the lateral parts OP is formed by a curved line, and those parts IP and OP are smoothly connected to each other at the points B so as not to provide an inflection point.

The lateral part OP can be either a multi-radius curvature or a single radius of curvature which is less than CR1.

An embodiment of the present invention will now be described in detail in conjunction with the accompanying drawings, in which:
Fig.1 is a cross sectional view of a radial tyre of the present invention;
Fig.2 is a cross sectional view of the belt explaining the thickness centre line thereof;
Figs.3 and 4 are cross sectional views of three-ply belts;
Fig.5 is a perspective view of a belt cord;
Fig.6 is a diagram explaining variation of the belt profile between the ground contacting and non-ground contacting states of the tyre;
Fig.7 is a diagram explaining the belt edge camber height CH and the belt edge camber area SA;
Fig.8 is a schematic cross sectional view of the tyre explaining the belt profile variation;
Fig.9 is a graph showing the relationship between CH and BW/TW; and
Fig.10 is a graph showing the relationship between BBU and SA/BW.

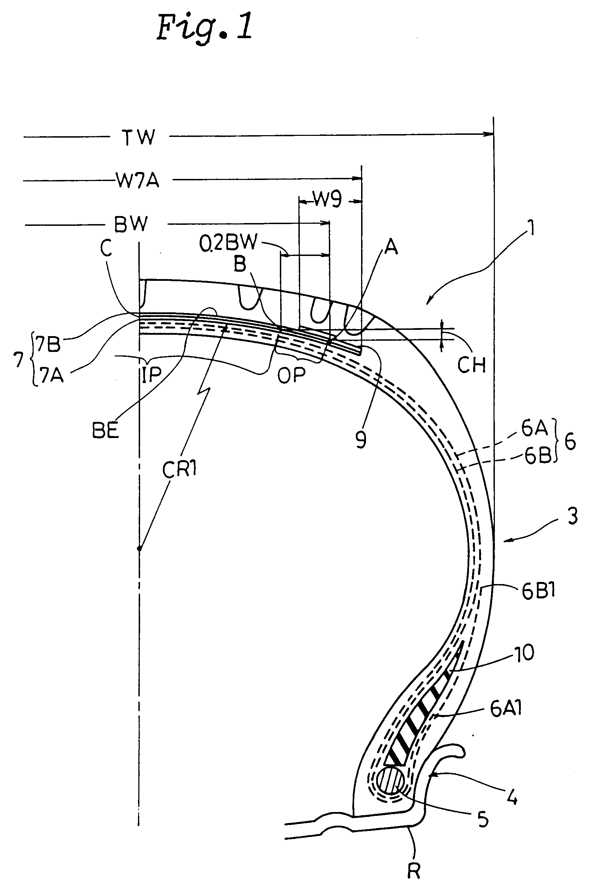

In Fig.1, the tyre 1 is mounted on its regular rim R and inflated to its regular inner pressure, but under no load, that is, the normally inflated but unloaded state of the tyre 1 is shown.

The tyre 1 has a tread portion 2, a pair of axially spaced apart bead portions 4, and a pair of sidewalls 3 extending between the tread edges and the bead portions.

A bead core 5 is disposed in each bead portion 4, a carcass 6 extends between the bead portions 4 and is turned up around the bead cores 5 to be secured thereto. A belt is disposed radially outside the carcass 6, and in each bead a bead apex 10 made of hard rubber with a JIS-A hardness of 70 to 90 is positioned between the main portion and each turned up portion of the carcass and extends taperingly radially outwardly from the bead core 5.

The carcass 6 in this embodiment is composed of two plies 6A and 6B turned up around the bead cores 2 from the axially inside to the outside thereof.

The radially ouster edge of the axially inner carcass ply turned up portion 6A1 is terminated radially outwards of the radially outer edge of the bead core 5.

The radially outer edge of the axially outer carcass ply turned up portion 6B1 extends over the radially outer edge of the axially inner carcass ply turned up portion 6A1, and it is terminated near the maximum tyre section width point.

The cords in each carcass ply are arranged radially at an angle of 60 to 90 degrees with respect to the tyre equator CO so as to provide a radial or semi-radial structure.

For the carcass cords, steel cords or organic fibre cords, e.g. nylon, rayon, polyester or the like can be used.

The belt in this embodiment includes a breaker belt 7 and a band or bandage belt 9 disposed radially outside the breaker belt 7.

The breaker belt 7 comprises two plies 7A and 7B. The width W7A of the radially inner ply 7A is larger than the width of the ground contacting area, and the width W7B of the radially outer ply 7B is substantially equal to the width of the ground contacting area.

The width W7A of the radially inner ply 7A is set to be 1.01 to 1.20 times the width W7B of the radially outer ply 7B.

It is preferable that the effective belt part BE is located within the the ground contacting region. If this part BE protrudes beyond the ground contacting region, the ride comfort is deteriorated, and belt edge separation failure is liable to occur.

In the above-mentioned breaker belt plies 7A and 7B, steel cords are used as the belt cords. The cords in each breaker belt ply are laid parallel with each other at an angle of 10 to 30 degrees with respect to the tyre equator so that the cords in the inner ply cross the cords in the outer ply.

The edge portions of the radially innermost belt ply 7A are spaced apart from the carcass, and the distance therebetween increases toward the belt ply edges. In the resultant wedge-shaped space, a rubber cushion (not shown ) is disposed.

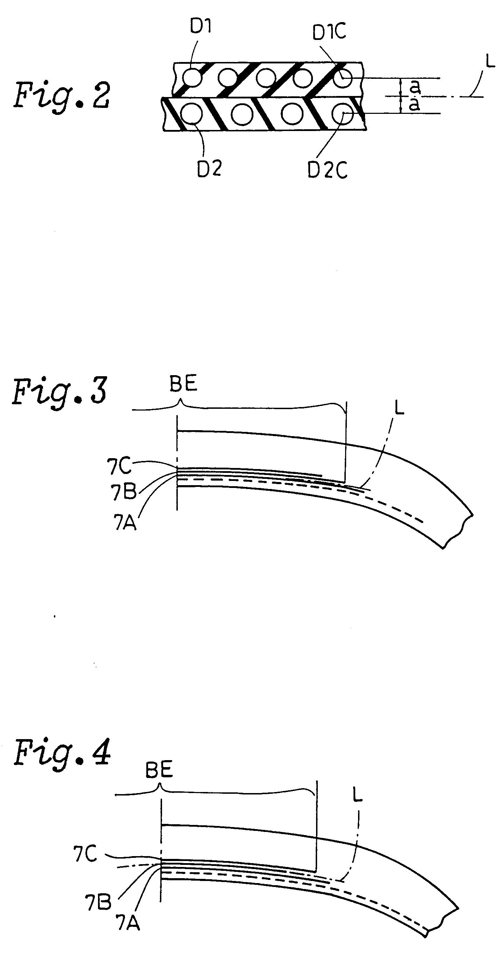

Therefore, in this embodiment, as the radially outer belt ply 7B is narrower than the inner belt ply 7A, the above-mentioned effective part BE is formed between the axial edges of the outer ply 7B. The effective belt width BW is the width of the outer belt ply 7B. The thickness centre line L or belt profile is a curved line drawn radially equidistantly from the centre D1C of the cords D1 in the belt ply 7B and the centre D2C of the cords D2 in the belt ply 7A, as shown in Fig.2.

Incidentally, in the case where an additional breaker belt ply 7C of parallel cords laid at an angle of about 10 to 30 degrees with respect to the tyre equator is disposed on the radially outside of the above-mentioned breaker belt plies 7A and 7B, as shown in Figs.3 and 4, if the ply 7C is narrowest as shown in Fig.3, then the effective belt width BE is of the ply 7B, and the belt profile L is between the plies 7A and 7B.

If the ply 7C has a secondary wider width as shown in Fig.4 and the cord direction thereof is crosswise to that of the widest ply 7A, then the effective belt width BE is of the ply 7C, and the belt profile L is defined between the plies 7C and 7A.

In this embodiment, as mentioned above, the bandage belt 9 has its cords laid substantially parallel to the tyre equator CO being at a small angle of 0 to 10 degrees, preferably 0 to 5 degrees with respect to the tyre equator, and it is formed by winding one or more rubber coated cords or by winding a strip of rubber coated parallel cords. The main difference between the breaker belt and bandage belt is the cord angle.

The bandage belt 9 in this example is composed of axially spaced edge belt plies. The edge belt ply is disposed on the edge of the breaker belt 7 and extends axially so as to cover the edge of the inner belt ply 7A and the edge of the outer belt ply 7B. The width W9 thereof is 15 to 40% of the width W7A of the belt ply 7A.

For the bandage cords, organic fibre cords having a relatively large extensibility such as nylon, polyester, rayon or the like are used, so that the bandage belt can follow the deformation of the breaker belt 7 thereby providing a tight and stable hooping force on the breaker belt 7, and separation from the breaker belt 7 is prevented.

This arrangement of the bandage belt 9 can reduce the rigidity difference around the breaker belt edge portion and evens out the ground pressure distribution. Therefore, uneven wear is prevented and high speed steering stability is improved.

Test tyres of size 215/60R15-90H having the structure shown in Fig.1 (but without the bandage belt 9) were prepared and tested for evenness of wear, wear during cornering, steering stability, and durability.

In the test tyres, the carcass cord material was polyester, the carcass cord angle was 88 degrees to the tyre equator, the number of breaker belt plies was two, and the breaker belt cord was a 1X5/0.25 steel cord. The other specifications of the test tyres and test results are given in Table 1.

In the wear evenness test, the state of wear which had occurred after running for 3000 km under the regulated tyre load was examined.

In the cornering wear test, the amount of shoulder wear was measured after making 500 turns at a radius of 50m at a speed of 40 km/h.

In the steering stability test, the test tyres were installed on a 3000 cc FR passenger car, and the steering stability during slalom running on a flat road at 80 km/h was evaluate by a test driver.

The durability test was the speed step-up test according to ECE30.

The test results in Table 1 are indicated by an index based on the reference tyre 1 being set at 100. The larger the index, the better the performance.

As seen from Table 1, the working example tyres 1-3 were worn evenly in comparison with the reference tyres 1-3.

Further, in this embodiment, in order to improve the adhesion of the steel breaker belt cord to its surrounding rubber, a steel cord having the following feature was used.

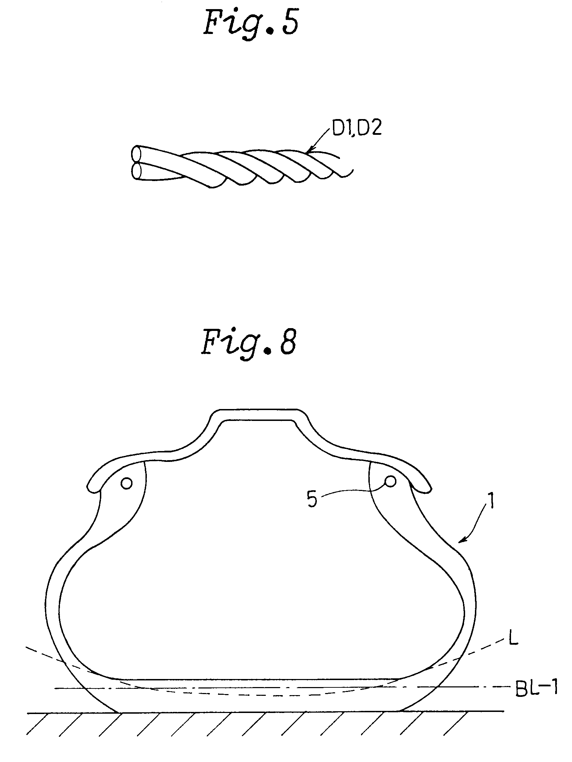

Fig.5 shows the structure of the breaker belt cord D1, D2. The cord was composed of two or three strands, in this example two strands, twisted together. Each strand was a steel monofilament having a diameter of 0.25 to 0.32 mm. The twist pitches of the strands were 8 to 15 mm.

Therefore, the topping rubber penetrated into the cord, and the adhesion therebetween was improved compared to other cords.

If the diameter is less than 0.25 mm, the belt rigidity becomes low and the required performance is not fully obtained.

If the diameter is more than 0.32 mm, the belt rigidity becomes excessively high and the ride comfort is deteriorated and tyre weight is unfavourably increased.

Such steel cords are embedded parallel to each other in coating or topping rubber to form the breaker belt ply. The cord count in each ply is set to be 39 to 60 ends/5cm.

When the cord count is less than 39 ends/5cm, the belt rigidity becomes insufficient to maintain or improve the tyre performance.

On the other hand, if the cord count is more than 60 ends/5cm, the belt rigidity is excessively increased, and the ride comfort is deteriorated and further tyre weight is unfavourably increased.

By the above-mentioned cord structure, the adhesion can be improved, but due to the looseness of the twist and the use of monofilaments as strands, friction and rubbing between the strands are liable to occur.

Therefore, under severe service conditions, a breakage of the steel filament due to the friction and rubbing (hereinafter, called "BBU") is liable to occur.

In order to prevent BBU (breakage of the strand), the belt edge camber area SA (mm²) and the effective belt width BW (mm) are set to satisfy the following equation 6.$\text{0 =< SA/BW =<0.1}$ Fig.6 shows the amount (V) of deformation from the belt profile (L) of the non-ground contacting state to the belt profile (BL) of the ground contacting state.

The amount (V) becomes larger towards the edges A, and the rate of this increase starts to increase at a point (P).

The point (P) is the separating point of the belt profile L from the arc C-B-D of the single radius CR1, as shown in Fig.7.

The above-mentioned BBU is liable to occur at this point (P).

In Fig.7, as the single radius arc, whose radius is CR1, extends beyond the 0.3BW point B, the separating point (P) is located rather axially outside of the point B.

In this case, therefore, the belt edge camber area SA is given by the hatched generally triangular area A-P-D.

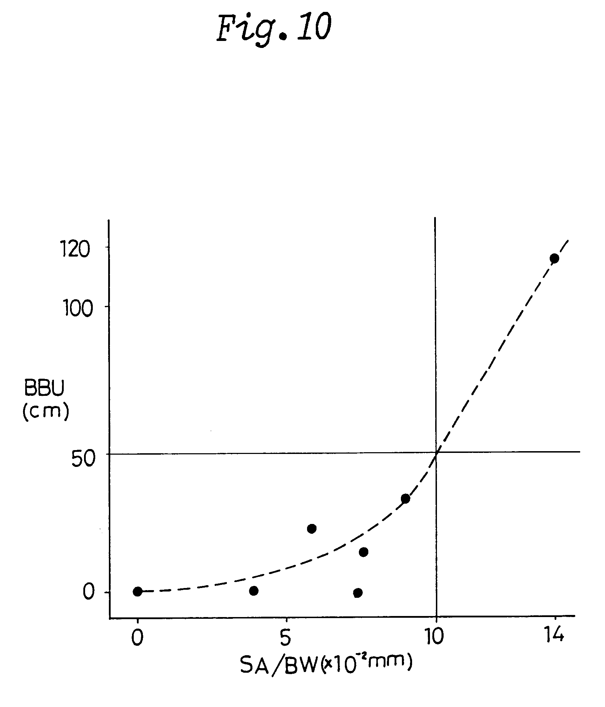

Table 2 and Fig.10 show the results of BBU resistance tests conducted by the inventors.

In the tests, each test tyre was mounted on its regular rim and inflated to its regular inner air pressure, and using 1600-3000cc passenger cars, the tyre was subjected to 300 figure-of-eight turns running at a speed of 25 km/h. The figure-of-eight test course was made up of two 7m radius circles, and then the tyre was cut-open and inspected for BBU.

In Table 2, BBU is expressed by the total length of the broken parts around the tyre circumference.

In the test tyres, the cord structure of the breaker belt cord was 1 X 2, (two steel monofilaments twisted together ), the diameter of the steel monofilament was 0.30 mm, and the cord count was 49 ends/5 cm.

It was known that if the BBU total length exceeds 50 cm in the test, then in actual road use of such a tyre BBU occurs. Therefore, as seen from Fig.10, by setting the value of SA/BW in the range of 0 to 0.1 mm, the occurrence of BBU can be effectively prevented.

Accordingly, the belt edge camber area SA and the effective belt width BW are set to satisfy the following equation 6 as mentioned above.$\text{0 =< SA/BW =< 0.1}$ Incidentally, in the tyres of the present invention, it is possible to dispose a reinforcing layer in each bead portion, for example between the carcass and the bead core and to provide a rim chafer on the outermost side of the bead portion.

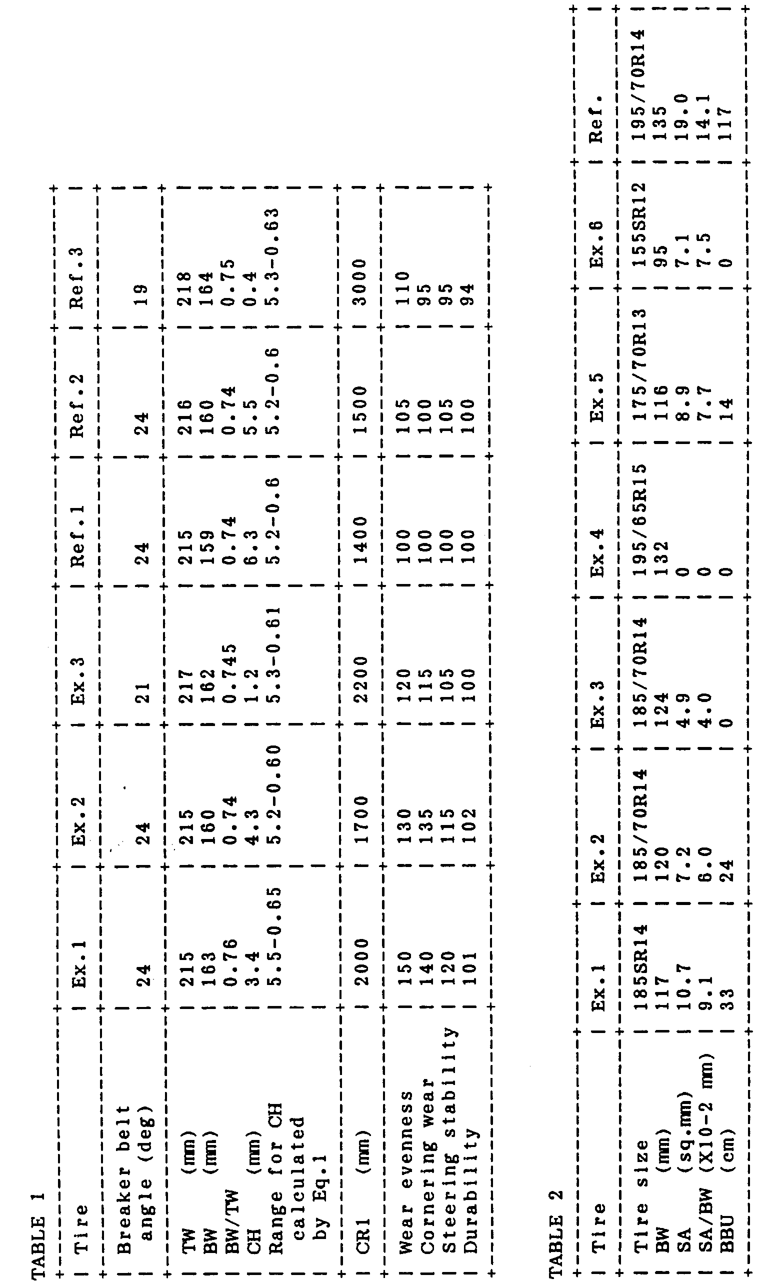

## Claims

1. A belted radial ply tyre comprising a bead core (5) disposed in each bead portion (4), a carcass (6) extending between the bead portions (4) and turned up around the bead cores (5), and a belt (7) comprising at least two crossed plies (7A,7B) disposed radially outside the carcass (6) and inside the tread, the belt having edge portions curved towards the sidewalls characterised in that in a state that the tyre is mounted on its regular rim and inflated to its regular inner pressure but having no applied load, the effective belt width BW (mm) of the effective belt part BE of the belt (7), the belt edge camber height CH (mm) of the belt (7), and the tyre section width TW (mm) satisfy the equation$\text{2.50(BW/TW)-1.25 < CH < 13.3(BW/TW)-4.65}$

2. A tyre according to claim 1, characterised in that the belt (7) has provided a profile such that an arc passing three points B and C on the thickness centre line L has its centre on the equatorial plane of the tyre, and the radius CR1 of the arc is more than 1.4 times the tyre section width TW.

3. A tyre according to claim 1, characterised in that the belt (7) comprises at least two crossed plies (7A,7B) of parallel steel cords disposed radially outside the carcass (6) and inside the tread, each said steel belt cord being composed of two or three strands twisted together, each strand being a steel monofilament, the diameter of said steel monofilament being 0.25 to 0.32 mm, the twisting pitches of the strands being 8 to 15 mm, the cord count of the steel cords in each belt ply being 39 to 60 ends/5cm, the quotient SA/BW of the belt edge camber area SA divided by the effective belt width BW being not smaller than 0 and smaller than 0.1.

4. A tyre according to claim 1 or 2, characterised in that the effective belt width BW (mm), the belt edge camber height CH (mm) and the tyre section width TW (mm) satisfy the following equation:$\text{6.67(BW/TW)-3.33 < CH < 10.0(BW/TW)-3.0.}$

5. A tyre according to claim 1, characterised in that the radius CR1 of the arc is more than 1.4 times and not more than 15 times the tyre section width TW.

6. A tyre according to claim 4, characterised in that the radius CR1 of the arc is more than 1.4 times and not more than 10 times the tyre section width TW.

7. A tyre according to claim 3, characterised in that the effective belt width BW (mm) of the effective belt part BE of the belt, the belt edge camber height CH (mm) of the belt, and the tyre section width TW (mm) satisfy the following equation 1.$\text{2.50(BW/TW)-1.25 < CH < 13.3(BW/TW)-4.65}$

8. A tyre according to claim 7, characterised in that said belt provided with a profile such that an arc passing three points B and C on the thickness centre line L has its centre on the equatorial plane of the tyre, and the radius CR1 of the arc is more than 1.4 times the tyre section width TW.

9. A tyre according to claim 8, characterised in that the effective belt width BW (mm), the belt edge camber height CH (mm) and the tyre section width TW (mm) satisfy the following equation:$\text{6.67(BW/TW)-3.33 < CH < 10.0(BW/TW)-3.0.}$

10. A tyre according to claim 9, characterised in that the radius CR1 of the arc is more than 1.4 times and not more than 15 times the tyre section width TW.

11. A tyre according to claim 10, characterised in that the radius CR1 of the arc is more than 1.4 times and not more than 10 times the tyre section width TW.

## Patentansprüche

1. Ein mit Gürtel versehener Radialreifen mit einem Wulstkern (5), der in jedem Wulstteil (4) angeordnet ist, einer Karkasse (6), die sich zwischen den Wulstteilen (4) erstreckt und um die Wulstkerne (5) umgeschlagen ist, und einem Gürtel (7) mit wenigstens zwei gekreuzten Lagen (7A, 7B), die radial außerhalb der Karkasse (6) und innerhalb der Lauffläche angeordnet sind, wobei der Gürtel Randteile aufweist, die auf die Seitenwände zu gekrümmt sind,
dadurch gekennzeichnet,
daß in einem Zustand, in dem der Reifen auf seiner regulären Felge aufgezogen und auf seinen regulären Innendruck aufgepumpt ist, aber keine aufgebrachte Belastung aufweist, die wirksame Gürtelbreite BW (mm) des wirksamen Gürtelteils BE des Gürtels (7), die Gürtelrandsturzhöhe CH (mm) des Gürtels (7) und die Reifenschnittbreite TW (mm) die Gleichung$\text{2,50(BW/TW)-1,25 < CH < 13,3(BW/TW)-4,65}$ erfüllen.

2. Ein Reifen nach Anspruch 1,
dadurch gekennzeichnet, daß der Gürtel (7) mit einem Profil derart versehen ist, daß das Zentrum eines Bogens, der über die drei Punkte B und C auf der Dickenzentrumslinie L verläuft, auf der Äquatorialebene des Reifens liegt, und der Radius CR1 des Bogens mehr als das 1,4-fache der Reifenschnittbreite TW beträgt.

3. Ein Reifen nach Anspruch 1,
dadurch gekennzeichnet, daß der Gürtel (7) wenigstens zwei gekreuzte Lagen (7A, 7B) paralleler Stahlcorde umfaßt, die radial außerhalb der Karkasse (6) und innerhalb der Lauffläche angeordnet sind, wobei jeder Stahlgürtelcord aus zwei oder drei Fäden zusammengesetzt ist, die miteinander verdreht sind, jeder Faden ein Stahlmonofilament ist, der Durchmesser des Stahlmonofilaments 0,25 bis 0,32 mm beträgt, die Verdrehungssteigungen der Fäden 8 bis 15 mm beträgt, die Cordzählung der Stahlcorde in jeder Gürtellage 39 bis 60 Enden/5 cm beträgt, der Quotient SA/BW der Gürtelrandsturzfläche SA dividiert durch die wirksame Gürtelbreite BW nicht kleiner als 0 und kleiner als 0,1 ist.

4. Ein Reifen nach Anspruch 1 oder 2,
dadurch gekennzeichnet, daß die wirksame Gürtelbreite BW (mm), die Gürtelrandsturzhöhe CH (mm) und die Reifenschnittbreite TW (mm) die folgende Gleichung erfüllen,$\text{6,67(BW/TW)-3,33 < CH < 10,0(BW/TW)-3,0.}$

5. Ein Reifen nach Anspruch 1,
dadurch gekennzeichnet, daß der Radius CR1 des Bogens mehr als das 1,4-fache und nicht mehr als das 15-fache der Reifenschnittbreite TW beträgt.

6. Ein Reifen nach Anspruch 4,
dadurch gekennzeichnet, daß der Radius CR1 des Bogens mehr als das 1,4-fache und nicht mehr als das 10-fache der Reifenschnittbreite TW beträgt.

7. Ein Reifen nach Anspruch 3,
dadurch gekennzeichnet, daß die wirksame Gürtelbreite BW (mm) des wirksamen Gürtelteils BE des Gürtels, die Gürtelrandsturzhöhe CH (mm) des Gürtels und die Reifenschnittbreite TW (mm) die folgende Gleichung 1 erfüllen,$\text{2,50(BW/TW)-1,25 < CH < 13,3(BW/TW)-4,65.}$

8. Ein Reifen nach Anspruch 7,
dadurch gekennzeichnet, daß der Gürtel mit einem Profil derart versehen ist, daß das Zentrum eines Bogens, der über die Punkte B und C auf der Dickenzentrumslinie L verläuft, auf der Äquatorialebene des Reifens liegt, und der Radius CR1 des Bogens mehr als das 1,4-fache der Reifenschnittbreite TW beträgt.

9. Ein Reifen nach Anspruch 8,
dadurch gekennzeichnet, daß die wirksame Gürtelbreite BW (mm), die Gürtelrandsturzhöhe CH (mm) und die Reifenschnittbreite TW (mm) die folgende Gleichung erfüllen,$\text{6,67(BW/TW)-3,33 < CH < 10,0(BW/TW)-3,0.}$

10. Ein Reifen nach Anspruch 9,
dadurch gekennzeichnet, daß der Radius CR1 des Bogens mehr als das 1,4-fache und nicht mehr als das 15-fache der Reifenschnittbreite TW beträgt.

11. Ein Reifen nach Anspruch 10,
dadurch gekennzeichnet, daß der Radius CR1 des Bogens mehr als das 1,4-fache und nicht mehr als das 10-fache der Reifenschnittbreite TW beträgt.

## Revendications

1. Pneumatique à carcasse radiale ayant une ceinture, comprenant une tringle (5) placée dans chaque partie de talon (4), une carcasse (6) placée entre les parties de talon (4) et repliée autour des tringles (5), et une ceinture (7) comprenant au moins deux nappes (7A, 7B) qui sont croisées et qui sont disposées radialement à l'extérieur de la carcasse (6) et à l'intérieur de la bande de roulement, la ceinture ayant des parties de bord recourbées vers les flancs, caractérisé en ce que, à un état dans lequel le pneumatique est monté sur sa jante normale et est gonflé à sa pression interne normale mais sans charge appliquée, la largeur efficace de ceinture BW (mm) de la partie efficace de ceinture BE de la ceinture (7), la hauteur CH de cambrure des bords de ceinture (mm) de la ceinture (7) et la largeur TW en coupe du pneumatique (mm) correspondent à l'équation :$\text{2,50(BW/TW) - 1,25 < CH < 13,3(BW/TW) - 4,65}$

2. Pneumatique selon la revendication 1, caractérisé en ce que la ceinture (7) a un profil tel qu'un arc de cercle passant en trois points B et C sur l'axe central L dans le sens de l'épaisseur a son centre dans le plan équatorial du pneumatique, et le rayon CR1 de l'arc de cercle dépasse 1,4 fois la largeur en coupe TW du pneumatique.

3. Pneumatique selon la revendication 1, caractérisé en ce que la ceinture (7) comporte au moins deux nappes croisées (7A, 7B) de câblés parallèles d'acier placées radialement à l'extérieur de la carcasse (6) et à l'intérieur de la bande de roulement, chaque câblé de ceinture d'acier étant composé de deux ou trois brins retordus, chaque brin étant un monofilament d'acier, le diamètre du monofilament d'acier étant compris entre 0,25 et 0,32 mm, les pas de torsion des brins étant compris entre 8 et 15 mm, le nombre de câblés d'acier de chaque nappe de ceinture étant compris entre 39 et 60 par fraction de 5 cm de largeur, le quotient SA/BW de la surface SA de cambrure de bord de ceinture divisé par la largeur efficace BW de ceinture n'étant pas inférieur à 0 et étant inférieur à 0,1.

4. Pneumatique selon la revendication 1 ou 2, caractérisé en ce que la largeur efficace de ceinture BW (mm), la hauteur CH de cambrure de bord de ceinture (mm) et la largeur TW en coupe du pneumatique (mm) correspondent à l'équation suivante :$\text{6,67(BW/TW) - 3,33 < CH < 10,0(BW/TW) - 3,0}$

5. Pneumatique selon la revendication 1, caractérisé en ce que le rayon CR1 de l'arc est supérieur à 1,4 fois et n'est pas supérieur à 15 fois la largeur TW en coupe du pneumatique.

6. Pneumatique selon la revendication 4, caractérisé en ce que le rayon CR1 de l'arc est supérieur à 1,4 fois et n'est pas supérieur à 10 fois la largeur en coupe TW du pneumatique.

7. Pneumatique selon la revendication 3, caractérisé en ce que la largeur efficace BW de la ceinture (mm) de la partie efficace de ceinture BE de la ceinture, la hauteur CH de cambrure de bord de ceinture (mm) de la ceinture et la largeur TW en coupe du pneumatique (mm) correspondent à l'équation suivante (1) :$\text{2,50(BW/TW) - 1,25 < CH < 13,3(BW/TW) - 4,65}$

8. Pneumatique selon la revendication 7, caractérisé en ce que la ceinture est formée avec un profil tel qu'un arc de cercle passant par trois points B et C sur l'axe central L suivant l'épaisseur a son centre dans le plan équatorial du pneumatique, et le rayon CR1 de l'arc de cercle est supérieur à 1,4 fois la largeur TW en coupe du pneumatique.

9. Pneumatique selon la revendication 8, caractérisé en ce que la largeur efficace BW de ceinture (mm), la hauteur de cambrure de bord de ceinture CH (mm) et la largeur TW en coupe du pneumatique (mm) correspondent à l'équation suivante :$\text{6,67(BW/TW) - 3,33 < CH < 10,0(BW/TW) - 3,0}$

10. Pneumatique selon la revendication 9, caractérisé en ce que le rayon CR1 de l'arc est supérieur à 1,4 fois et n'est pas supérieur à 15 fois la largeur TW en coupe du pneumatique.

11. Pneumatique selon la revendication 10, caractérisé en ce que le rayon CR1 de l'arc est supérieur à 1,4 fois et n'est pas supérieur à 10 fois la largeur TW en coupe du pneumatique.
